# FASCICULE DE BREVET EUROPEEN

(11) **EP 1 133 632 B1**
(45) Date de publication et mention de la délivrance du brevet: **22.12.2004**
(21) Numéro de dépôt: 00960803.5
(22) Date de dépôt: 06.09.2000
(51) Int. Cl.: F02M 37/02, F02M 37/10, F02M 37/20, F02M 37/22

(54) **DISPOSITIF DE PUISAGE DE CURBURANT POUR RESERVOIR DE VEHICULE AUTOMOBILE**
KRAFTSTOFFZUFUHRVORRICHTUNG FÜR KRAFTFAHRZEUGBEHÄLTER
FUEL DRAWING DEVICE FOR MOTOR VEHICLE TANK

(30) Priorité: 07.09.1999 FR 9911172
(43) Date de publication de la demande: 19.09.2001
(73) Titulaire: MARWAL SYSTEMS, 51000 Chalons en Champagne (FR)
(72) Inventeur: VILELA, Frédérico, F-51000 Chalons-en-Champagne (FR); STATHOPOULOS, Anne, F-51510 Fagniere (FR)
(74) Mandataire: Texier, Christian
(86) Numéro de dépôt international: PCT/FR2000/002450
(87) Numéro de publication internationale: WO 2001/018380

(56) Documents cités:
- EP-A- 0 629 522
- DE-A- 3 732 415
- DE-A- 4 127 768
- DE-A- 4 242 242
- DE-A- 19 509 143
- DE-A- 19 750 036

## Description

La présente invention concerne le domaine des systèmes de puisage de carburant dans un réservoir de véhicule automobile.

De nombreux systèmes ont été proposés à cet effet.

Généralement, les systèmes de puisage de carburant dans un réservoir de véhicule automobile comprennent une pompe électrique qui aspire du carburant dans le réservoir ou une réserve située dans ce réservoir.

Le but d'une telle réserve est de limiter les évolutions de niveau de carburant au niveau de l'entrée d'aspiration de la pompe, pouvant résulter des accélérations, décélarations, ou force centrifuge lors de trajectoires non rectilignes du véhicule.

Par ailleurs, les systèmes de puisage connus comprennent généralement un filtre grossier ou crépine placé sur l'entrée de la pompe et un filtre fin destiné à garantir la qualité du carburant dirigé vers le moteur.

On a proposé en particulier de tels systèmes de puisage de carburant dans lesquels le filtre fin est situé en aval de la pompe électrique, comme décrit par exemple dans le document WO-A-99/01 658.

Les systèmes de puisage connus ont déjà rendu de grands services.

Cependant ils ne donnent pas totalement satisfaction.

En particulier, malgré de nombreuses recherches, on n'a su jusqu'ici répondre correctement à différentes demandes d'évolution ressenties dans le secteur automobile.

En premier lieu, il faut noter que lorsque le filtre fin est situé en aval de la pompe, c'est-à-dire sur le conduit de sortie de celle-ci, le filtre fin est placé sous pression et son boîtier doit par conséquent présenter une tenue mécanique apte à répondre à la sollicitation due à cette pression.

De là est né un certain souhait de mettre le filtre fin non pas en aval de la pompe, mais en amont de celle-ci, c'est-à-dire sur son entrée. Cela permettrait de réduire les contraintes sur le boîtier du filtre fin et le cas échéant également éventuellement de supprimer la crépine d'entrée.

Cependant disposer le filtre fin en amont de la pompe génère un problème non résolu de façon satisfaisante jusqu'ici : lors du premier démarrage du système, ou encore après désamorçage de celui-ci ou à l'occasion de faibles niveaux, si le filtre fin est situé en amont de la pompe, la pompe électrique se doit alors d'aspirer un gros volume d'air correspondant sensiblement au volume du boîtier du filtre fin.

En second lieu, il faut noter que jusqu'ici la majorité des pompes électriques utilisées dans des systèmes de puisage de carburant sont du type pompes rotatives à engrenage. Le principe de fonctionnement de ces pompes consiste à aspirer le liquide dans l'espace compris entre deux dents consécutives et à le faire passer ensuite vers une section de refoulement.

Cependant, de nos jours, il existe une forte demande pour remplacer les pompes rotatives à engrenage par des pompes turbines ou centrifuges susceptibles de présenter de réels avantages. Les pompes turbines ou centrifuges sont des machines dont la rotation d'une roue ou rotor produit un régime de pressions et de vitesses qui détermine la circulation d'un liquide dans un circuit, la grandeur du débit circulant résultant de l'équilibre entre l'énergie massique utile délivrée par la pompe et l'énergie massique résistante du circuit.

Cependant, de nos jours, dans de nombreuses configurations, les tentatives d'utilisation de pompes turbines ou centrifuges pour le puisage de carburant ne donnent pas satisfaction en raison des problèmes d'amorçage inhérents à ce type de pompes. Et ce problème est particulièrement vif pour des systèmes dans lesquels le filtre fin est situé en amont de la pompe en raison de la perte de charge générée par ce filtre.

En troisième lieu, il faut souligner que les pompes à turbine ou centrifuges possèdent généralement un orifice de dégazage. Et la présence de cet orifice de dégazage sur le boîtier de pompe conduit à un risque de contamination, à l'arrêt de la pompe, non seulement du volume interne à la pompe, mais également d'une partie au moins du volume du boîtier de filtre fin relié à celle-ci.

En quatrième lieu, il faut souligner que la présence de l'orifice de dégazage sur le boîtier de pompe peut conduire à un risque de vidange de la réserve positive associée à la pompe, via cet orifice de dégazage, si des précautions particulières ne sont pas prises.

La présente invention a maintenant pour but de perfectionner les systèmes de puisage de carburant connus afin d'éliminer les inconvénients précités inhérents à la technique antérieure.

Ce but est atteint dans le cadre de la présente invention grâce à un dispositif de puisage de carburant pour réservoir de véhicule automobile comprenant une pompe de puisage et un filtre fin disposé en amont de la pompe, caractérisé par le fait que :
- le boîtier du filtre possède un orifice de dégazage à sa partie supérieure,
- la pompe de puisage possède également un orifice de dégazage, et
- le boîtier de filtre est équipé d'un conduit qui prolonge l'orifice de dégazage de ce boîtier, débouche dans une cavité commune à l'orifice de dégazage de la pompe et possède une embouchure située à une hauteur égale ou inférieure à celle de l'orifice de dégazage de la pompe, ledit conduit étant conformé pour constituer un siphon apte à conduire le carburant environnant son embouchure, vers l'intérieur du boîtier de filtre, lors des séquences d'arrêt de la pompe.

Selon une caractéristique avantageuse de la présente invention, la chambre d'entrée du boîtier de filtre est alimentée par une pompe à jet qui permet ainsi une mise en pression de l'étage d'entrée du filtre propre à aider la pompe dans son processus d'aspiration.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en coupe verticale d'un dispositif de puisage conforme à un premier mode de réalisation de la présente invention,
- la figure 2 représente une vue similaire en coupe verticale d'un dispositif conforme à une seconde variante de réalisation de la présente invention,
- la figure 3 représente une vue similaire en coupe verticale d'un mode de réalisation conforme à une troisième variante de la présente invention, selon des plans non coplanaires référencés 3-3 sur la figure 4,
- la figure 4 représente une vue en coupe transversale horizontale de ce dernier dispositif,
- la figure 5 représente une vue schématique en coupe axiale longitudinale d'une pompe à jet classique conforme à l'état de la technique,
- la figure 6 représente une vue schématique en section axiale longitudinale d'une pompe à jet conforme à la présente invention, et
- la figure 7 représente une vue schématique en coupe axiale longitudinale d'une pompe à jet conforme à une variante de réalisation préférentielle de la présente invention.

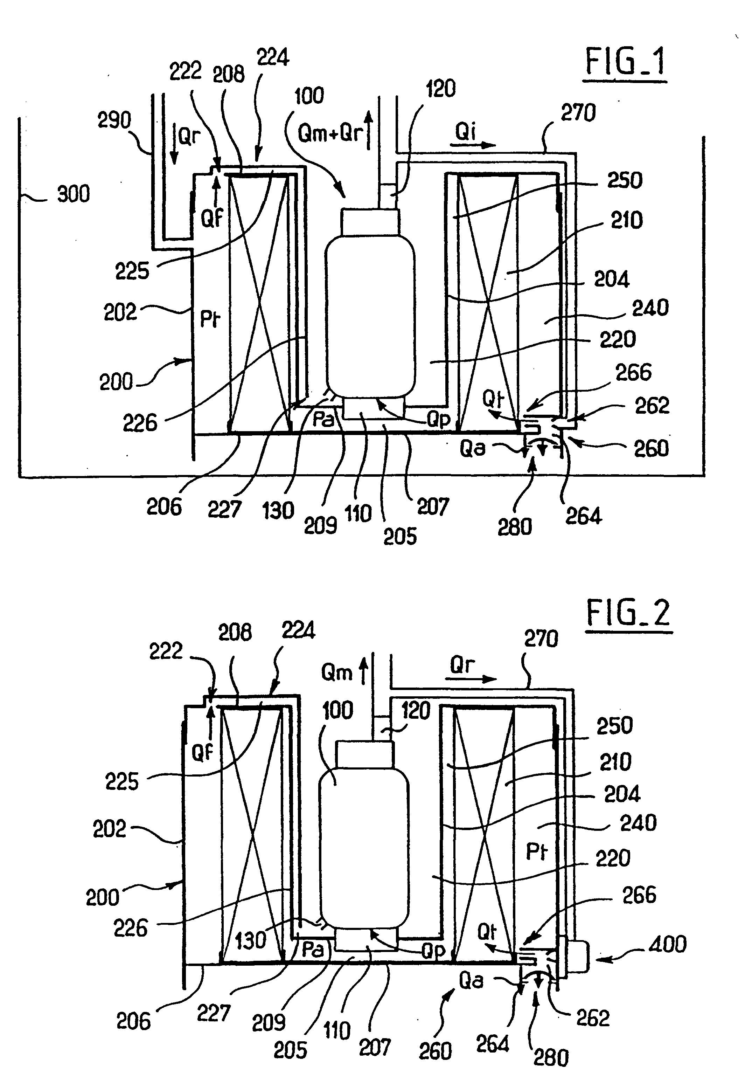

On va tout d'abord décrire le mode de réalisation illustré sur la figure 1 annexée.

On aperçoit sur cette figure 1 une pompe 100 d'axe vertical. Il s'agit très préférentiellement d'une pompe du type turbine ou centrifuge. Comme on l'a indiqué précédemment, une telle pompe turbine ou centrifuge possède une roue ou rotor adaptée pour produire un régime de pressions et de vitesses déterminant la circulation du carburant dans un circuit.

L'entrée 110 de la pompe 100 est placée à l'extrémité inférieure de la pompe. La sortie 120 est située à l'extrémité supérieure de la pompe.

La pompe 100 possède un orifice de dégazage 130 qui débouche sur l'extérieur du boîtier de pompe et qui est situé au voisinage de la partie inférieure de la pompe 100, sensiblement au-dessus de l'orifice d'entrée 110.

On aperçoit également sur la figure 1 annexée un boîtier de filtre 200 en forme générale d'anneau centré sur un axe vertical.

Le boîtier 200 est délimité essentiellement par une paroi 202 cylindrique radialement externe, une paroi 204 cylindrique radialement interne coaxiale de la paroi 202 précitée et deux cloisons 206 et 208, généralement horizontales, en forme de couronnes, qui délimitent respectivement les parties inférieures et supérieures du boîtier 200.

La couronne 208 est reliée de façon étanche aux bords supérieurs des deux cloisons cylindriques 202 et 204.

La couronne 206 est également reliée au bord inférieur de la cloison cylindrique externe 202. En revanche, comme on le précisera par la suite, elle n'est pas reliée à la base de la paroi cylindrique 204 radialement interne.

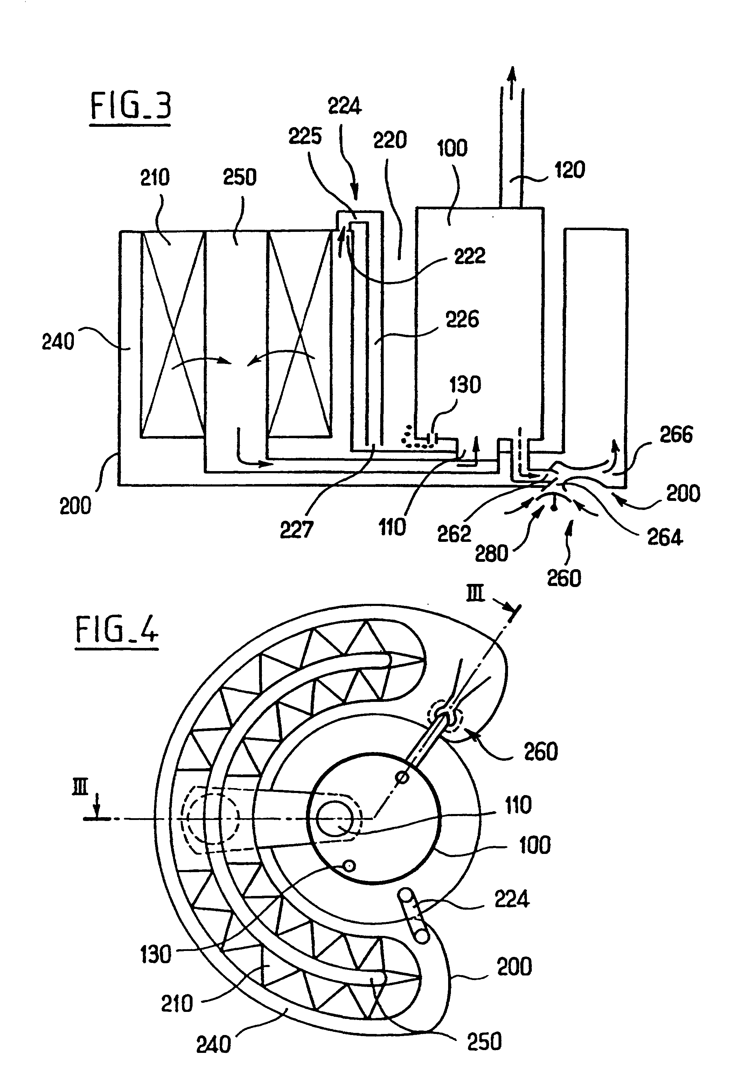

Le boîtier 200 loge un filtre 210 de géométrie annulaire. On verra cependant par la suite notamment en regard des figures 3 et 4 que le boîtier 200 et le filtre 210 peuvent présenter des géométries différentes.

Selon la figure 1, la pompe 100 est placée dans la cavité centrale 220 du boîtier de filtre 200, c'est-à-dire la cavité définie sur l'intérieur de la paroi 204 radialement interne.

Il est défini une liaison étanche entre les deux parois en couronne 206, 208 du boîtier 200 et respectivement la partie inférieure et la partie supérieure du filtre 210.

Ainsi, le boîtier 200 définit deux chambres 240, 250 respectivement radialement interne et radialement externe par rapport au filtre 210.

La chambre radialement externe 240 sert de chambre d'entrée au boîtier 200.

La chambre radialement interne 250 sert de chambre de sortie.

Pour cela, en partie centrale du boîtier 200, la paroi inférieure en couronne 206 est prolongée par une cloison étanche 207, tandis que la paroi cylindrique radialement interne 204 qui délimite la chambre de sortie 250 et qui est interrompue en-deça de la cloison 207 est prolongée par une paroi horizontale 209 parallèle à la cloison 207 précitée.

Les deux cloisons 207, 209 définissent ainsi une chambre cylindrique 205 qui communique avec la chambre de sortie 250 du boîtier de filtre. L'entrée 110 de la pompe débouche dans cette chambre 205. Par ailleurs, la doison 209 entoure de façon étanche l'entrée 110 du filtre.

La chambre d'entrée 240 du boîtier de filtre peut être remplie par tout moyen approprié à partir du réservoir 300.

De préférence, la chambre d'entrée 240 est remplie à l'aide d'une pompe à jet 260 de structure générale connue en soi.

Cette pompe à jet 260 possède une buse 262 convergeante formant tuyère motrice, alimentée en carburant par exemple par une dérivation 270 reliée à la sortie de la pompe 100. La pompe à jet 260 possède également une entrée de débit aspiré 264, à sa partie inférieure, protégée par un clapet 280, tel qu'un clapet parapluie, orienté pour autoriser un transfert de carburant du réservoir 300 vers la chambre interne de la pompe à jet 260 puis vers la chambre d'entrée 240, mais éviter un écoulement de carburant dans le sens inverse, c'est-à-dire à partir de l'étage d'entrée 240 et le volume interne de la pompe à jet 260 vers le réservoir 300.

Enfin, la pompe à jet 260 possède une sortie de refoulement 266 qui débouche dans la chambre d'entrée 240 du boîtier de filtre 200.

Selon une variante de réalisation, la sortie de refoulement 266 de la pompe à jet 260 peut être prolongée par un tuyau vertical dont l'extrémité supérieure est située au voisinage du sommet du boîtier 200. Dans ce cas, il n'est pas nécessaire de disposer un clapet anti-retour 280 sur l'entrée de débit aspiré 264. Néanmoins, un tel clapet reste possible en un lieu quelconque de la paroi inférieure du boîtier 200 délimitant la chambre d'entrée 240 pour autoriser un transfert de carburant du réservoir vers la chambre d'entrée 240 lorsque le niveau dans le réservoir 300 est supérieur à celui de la chambre d'entrée 240.

On notera également que, selon le mode de réalisation illustré sur la figure 1, le débit de carburant Qr non consommé par le moteur est retourné par un conduit 290 vers la chambre d'entrée 240 du filtre.

En variante cependant ce débit Qr issu du conduit 290 pourrait être utilisé pour alimenter la pompe à jet 260, plus précisément la buse convergeante formant tuyère motrice 262.

Selon encore une autre variante de réalisation, on peut envisager d'utiliser en commun le débit de retour Qr et le débit Qi dérivé de la sortie de pompe 10 pour alimenter la tuyère motrice 262 de la pompe à jet 260 assurant le remplissage de la chambre d'entrée 240 du filtre.

Le débit de carburant Qp aspiré par l'entrée 110 de la pompe 100 est égal à la somme du débit Qm + Qr + Qi débitée par la sortie 120.

Le débit Qt issu de la sortie 266 de la pompe à jet 260 est égal à la somme du débit Qi provenant de la dérivation 270 et du débit Qa provenant de l'entrée 264.

Pour permettre un remplissage du boîtier de filtre 200, la somme des débits Or de refoulement et Qt issu de la pompe à jet 260 doit être supérieure aux débits Qp aspiré par l'entrée 110 de pompe et Qf issu du boîtier 200 par l'intermédiaire d'un orifice de dégazage 222 situé en partie supérieure 200, typiquement sur la cloison 208.

Comme on le voit à l'examen de la figure 1, l'orifice de dégazage 130 de la pompe 100 débouche dans la cavité centrale 220 délimitée par la surface radialement interne 204 du boîtier de filtre 200.

On notera également à l'examen de la figure 1 que la structure conforme à la présente invention permet un grand volume de réserve positive pour la pompe 100, égal au volume du boîtier 200.

Comme on l'a indiqué précédemment, l'orifice de dégazage 222 du boîtier de filtre 200 est placé sur la cloison supérieure 208 en regard de la chambre d'entrée 240.

Cet orifice 222 débouche dans un conduit 224, lequel possède un tronçon 225 généralement horizontal qui longe la doison supérieure 208 et qui est prolongé par un tronçon 226 généralement vertical qui longe la paroi radialement interne 204 et redescend vers la base de la cavité 220. Le tronçon extrême 226 du conduit 224 possède ainsi une embouchure 227 située à proximité de la cloison 209 au voisinage de l'orifice de dégazage 130 de la pompe 100.

L'embouchure 227 du conduit 224 est située à une hauteur égale ou inférieure à celle de l'orifice de dégazage 130 de la pompe 100.

De préférence, l'embouchure 227 du conduit 224 est située en dessous du niveau de l'orifice de dégazage 130 de la pompe 100. Par ailleurs de préférence, le diamètre du conduit 124 est au moins légèrement supérieur au diamètre de l'orifice de dégazage 130 de la pompe 100.

Grâce à ces caractéristiques, le conduit 224 constitue un siphon susceptible de conduire le carburant présent dans la cavité centrale 220 définie par le boîtier de pompe 200 vers la chambre d'entrée 240 du filtre, lors de l'arrêt de la pompe 100, et éviter ainsi l'entrée de carburaht dans la pompe, via l'orifice de dégazage 130, susceptible de contaminer la pompe 100.

Lors d'un premier remplissage du système, le boîtier de filtre 200 est dégazé par l'intermédiaire de l'orifice 222 et du conduit 224 comprenant les deux tronçons 225, 226. De même la pompe 100 est dégazée par l'intermédiaire de l'orifice 130.

Lors de l'arrêt de la pompe 100, le boîtier 200 définit une réserve statique de carburant.

Par ailleurs, comme on l'a indiqué précédemment, le conduit 224 forme un siphon propre à aspirer le carburant présent dans la cavité centrale 220 vers la chambre d'entrée 240 et éviter ainsi l'aspiration de ce carburant vers l'intérieur de la pompe 100 par l'intermédiaire de l'orifice de dégazage 130.

On notera que le siphon formé par le conduit 224 est aidé dans cette fonction par la pression interne qui règne au sein de la pompe 100, lors de l'arrêt de celle-ci.

On a illustré sur la figure 2 une variante de réalisation conforme à la présente invention qui se distingue essentiellement du mode de réalisation illustré sur la figure 1 et précédemment décrit par la suppression du conduit de retour 290 et la présence d'un régulateur de pression 400 sur la sortie de la pompe, plus précisément sur le conduit de dérivation 270 utilisé pour alimenter la tuyère motrice 262 de la pompe à jet 260.

Le régulateur de pression 400 est conçu pour s'ouvrir et autoriser un débit de la sortie de la pompe 100 vers la tuyère motrice 262 quand la pression en sortie de la pompe 100 est supérieure à un seuil, et au contraire se fermer et interdire ce débit quand la pression en sortie de la pompe 100 est inférieure au seuil précité.

Le régulateur 400 peut faire l'objet de différentes variantes connues en soi. Il ne sera donc pas décrit dans le détail par la suite.

On notera cependant que de préférence le régulateur 400 comprend un boîtier qui loge une membrane souple sollicitée d'une part par un organe élastique taré dans le sens d'un appui contre une buse de sortie et d'autre part par la pression du carburant régnant dans la conduite de dérivation 270 dans le sens d'un éloignement de cette buse de sortie.

Ainsi, quand l'effort généré sur la membrane par la pression régnant dans la conduite de dérivation 270 est supérieur à l'effort généré par l'organe élastique taré, la membrane souple est décollée de la buse de sortie pour autoriser un écoulement vers la tuyère motrice 262 et ainsi alimenter la pompe 260.

Au contraire, quand l'effort généré sur la membrane souple du régulateur de pression 400 par la pression régnant dans la conduite 270 est inférieur à l'effort appliqué par l'organe élastique taré, ladite membrane est plaquée contre la buse de sortie pour interdire l'alimentation de la pompe à jet 260.

On va maintenant décrire la variante de réalisation illustrée sur les figures 3 et 4.

En premier lieu, cette variante se distingue de celles décrites précédemment en regard des figures 1 et 2 par le fait qu'elle comporte une pompe 100 comportant une pompe à jet 260 intégrée alimentée au niveau de sa tuyère motrice par l'intermédiaire d'un étage de pression de la pompe 100 et disposée pour alimenter la chambre d'entrée 240 du filtre comme décrit précédemment en regard des figures 1 et 2.

En second lieu, la variante de réalisation illustrée sur les figures 3 et 4 se distingue de celles précédemment décrites en regard des figures 1 et 2 par le fait qu'elle comporte un filtre 210 non pas annulaire et entourant la pompe 100, mais en forme de croissant et disposé latéralement à côté de la pompe 100.

La variante de réalisation illustrée sur les figures 3 et 4 reprend l'essentiel des caractéristiques décrites précédemment en regards des figures 1 et 2, et notamment une chambre d'entrée de filtre 240 alimentée par l'intermédiaire de la pompe à jet 260 et munie d'un orifice de dégazage 222 qui débouche dans un conduit 224 formant siphon, ainsi que l'orifice de dégazage 130 de la pompe 100 placée dans l'environnement de l'embouchure 227 du siphon 224.

On va décrire maintenant des perfectionnements conformes à la présente invention, spécifiques aux pompes à jet 260.

Ces perfectionnements s'appliquent en particulier à la variante de réalisation illustrée sur les figures 3 et 4.

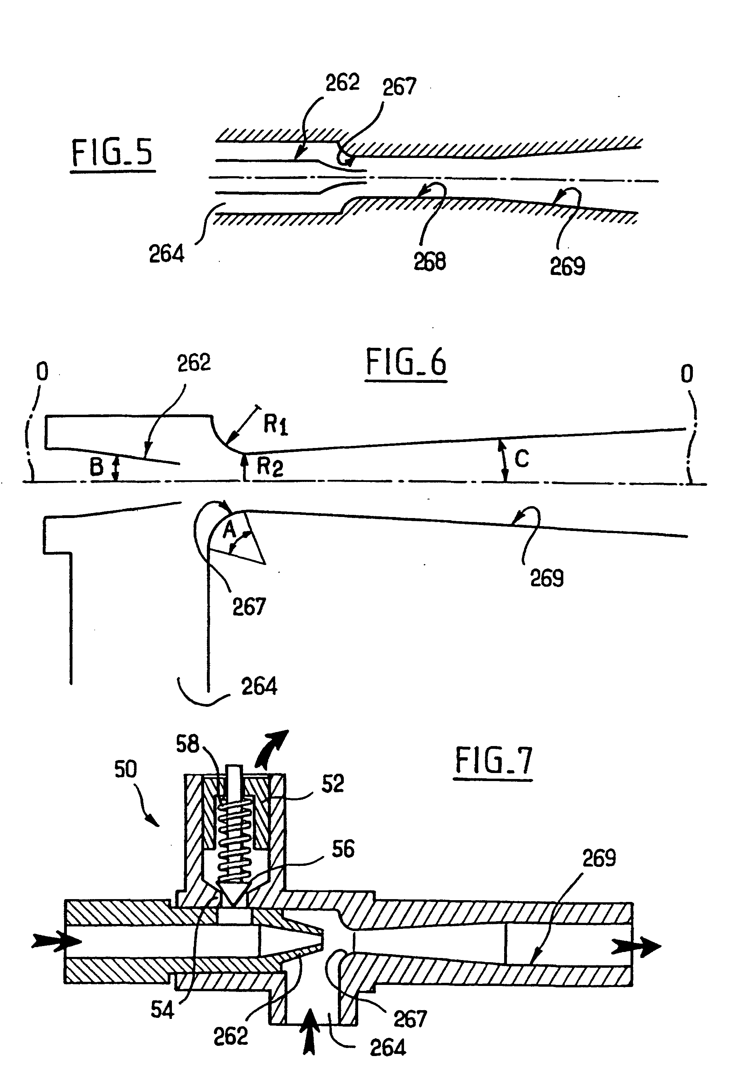

On a illustré sur la figure 5 annexée, la structure classique d'une pompe à jet.

Une telle pompe à jet classique, encore dénommée parfois éjecteur à liquide, est constituée schématiquement des éléments coaxiaux suivants :
- une première tuyère convergente 262 dite tuyère motrice alimentée en fluide sous pression,
- une seconde tuyère convergente 267 dite tuyère de reprise enveloppant la première et raccordée à une aspiration 264 du dispositif,
- une section cylindrique 268 appelée mélangeur, et
- un divergent terminal 269 faisant office de diffuseur.

Généralement le col de la tuyère motrice 262 est placé légèrement en amont du col de la tuyère de reprise 267, ou encore au niveau du col de cette tuyère de reprise 267, voir au niveau du raccord entre le col de la tuyère de reprise 267 et le mélangeur 268.

Le débit alimentant la tuyère motrice 262 constitue le débit moteur de l'éjecteur. Dans cette tuyère, l'énergie de pression est transformée en énergie cinétique. A la sortie le fluide moteur se présente donc sous la forme d'un jet de vitesse élevée. Par échange de quantité de mouvements turbulents, ce jet entraîne une certaine quantité de liquide au travers de la tuyère de reprise 267, cette quantité constituant le débit aspiré de l'éjecteur. Dans le mélangeur 268, l'échange de quantité de mouvements entre fluide moteur aspiré se poursuit et s'achève, les vitesses des deux jets s'égalisant progressivement. Au perte près, cette opération de mélange s'effectue à pression constante. Dans le divergent terminal 269, une partie de l'énergie cinétique du mélange est reconvertie en énergie de pression par diffusion.

Les dispositifs à pompe à jet connus ont déjà rendu de grands services. Cependant, ils ne donnent pas toujours pleinement satisfaction.

En particulier, la Demanderesse a constaté que les pompes à jet connues ne fonctionnent pas dans des conditions satisfaisantes lorsqu'il existe une contre-pression élevée sur la sortie du diffuseur 269.

La présente invention a maintenant pour but auxiliaire de proposer une nouvelle pompe à jet permettant d'éliminer les inconvénients de la technique antérieure.

Ce but est atteint dans le cadre de la présente invention grâce à une pompe à jet dans laquelle la tuyère de reprise 267 est reliée directement au diffuseur, sans mélangeur intermédiaire.

Selon une autre caractéristique avantageuse de la présente invention, la pompe à jet comporte un grand diffuseur.

On retrouve sur la figure 6 annexée, un corps définissant un canal centré sur un axe O-O et comprenant une première tuyère convergente 262 formant tuyère motrice alimentée en fluide sous pression, une seconde tuyère convergente 267 formant tuyère de reprise enveloppant la première et raccordée à une aspiration 264 du dispositif et un divergent 269 terminal faisant office de diffuseur.

Comme on l'a indiqué précédemment, la pompe à jet conforme à la présente invention se caractérise ainsi par l'absence de mélangeur entre la seconde tuyère convergente formant tuyère de reprise 267 et le divergent terminal 269 formant diffuseur.

Dans le cadre de la présente invention, la tuyère motrice 262 est de préférence de géométrie conique et présente une longueur comprise entre 4 et 8 mm très avantageusement de l'ordre du diamètre de l'aspiration 264.

L'extrémité formant buse de sortie du col de la tuyère motrice 262 est de préférence située à une distance comprise entre 1 et 3 mm de la tuyère de reprise.

De préférence, l'angle de convergence B de la tuyère motrice 262 est compris entre 0° et 30° et très avantageusement de l'ordre de 5°.

La tuyère de reprise 267 est de préférence délimitée par une calotte torique. Le rayon de courbure R1 de cette calotte torique 267 est de préférence compris entre 1 à 2 mm et très avantageusement de l'ordre de 1,6 mm. Par ailleurs, le rayon de courbure R1 de cette calotte torique est de préférence tangent au diffuseur 269.

Par ailleurs, le rayon interne R2 de la tuyère de reprise 267, au niveau de sa plus petite section est de préférence compris entre 1,8 à 3,0 mm et très avantageusement de l'ordre de 2,0 à 2,6 mm.

Par ailleurs, l'enveloppe torique de la tuyère de reprise 267 couvre de préférence un angle A compris entre 30° à 60° et très avantageusement de l'ordre de 45°.

Le divergent terminal formant diffuseur 269 est délimité de préférence par une enveloppe conique.

La longueur du tube diffuseur 269 est de préférence comprise entre 10 à 40 mm et très avantageusement de l'ordre de 18 mm.

Par ailleurs, l'angle de divergence C du tube diffuseur 269 est de préférence compris entre 2° à 10° et très avantageusement de l'ordre de 4°.

On a illustré sur la figure 7 une variante de réalisation selon laquelle le corps de la pompe à jet est équipé d'une valve 50 conçue pour s'ouvrir en cas de surpression dans la tuyère motrice 262.

Le clapet 50 est formé dans une tubulure 52 d'orientation radiale par rapport à l'axe O-O et raccordée sur le corps de la pompe à jet en amont de la tuyère convergente 262 formant tuyère motrice.

La tubulure 52 définit ainsi une chambre qui débouche dans la tuyère motrice 262. Plus précisément, la chambre précitée délimite un siège de clapet 54 dirigé radialement vers l'extérieur et contre lequel est sollicité une soupape ou corps de clapet 56, grâce à un ressort 58.

Selon la variante illustrée sur la figure 7, le corps de clapet 56 a la forme générale d'un champignon dont la tête évasée repose sur le siège de clapet 54 tandis que la queue effilée de clapet de plus faible section sert de guidage à coulissement du corps de clapet 56 dans une direction radiale par rapport à l'axe O-O et sert de retenue au ressort 58.

Bien entendu, le clapet 50 peut faire l'objet de nombreuses variantes de réalisation.

Il est conçu pour s'ouvrir par écartement du clapet 56 par rapport au siège de clapet 54 en cas de surpression à l'intérieur de la tuyère motrice 262, et pour se fermer au contraire quand la pression à l'intérieur de la tuyère motrice 262 tombe sous un seuil déterminé.

## Revendications

1. Dispositif de puisage de carburant pour réservoir de véhicule automobile comprenant une pompe de puisage (100) et un filtre fin (210) disposé en amont de la pompe (100),
**caractérisé par le fait que**
- le boîtier (200) du filtre possède un orifice de dégazage (222) à sa partie supérieure,
- la pompe de puisage (100) possède également un orifice de dégazage (130), et
- le boîtier de filtre (200) est équipé d'un conduit (224) qui prolonge l'orifice de dégazage (222) du boîtier (200), débouche dans une cavité (220) commune à l'orifice de dégazage de la pompe (100) et possède une embouchure (227) située à une hauteur égale ou inférieure à celle de l'orifice de dégazage (130) de la pompe (100), ledit conduit (224) étant conformé pour constituer un siphon apte à conduire le carburant environnant son embouchure (227), vers l'intérieur du boîtier de filtre (200), lors des séquences d'arrêt de la pompe de puisage (100).

2. Dispositif selon la revendication 1, **caractérisé par le fait que** la chambre d'entrée (240) du boîtier de filtre (200) est alimentée et mise sous pression par une pompe à jet (260).

3. Dispositif selon l'une des revendications 1 ou 2, **caractérisé par le fait que** la pompe de puisage (100) est de type pompe à turbine ou centrifuge.

4. Dispositif selon la revendication 2, **caractérisé par le fait que** la pompe à jet (260) est alimentée par une dérivation (270) raccordée à la sortie (120) de la pompe de puisage (100).

5. Dispositif selon la revendication 2, **caractérisé par le fait que** la pompe à jet (260) est alimentée par un conduit de retour (290) recevant le carburant non consommé par le moteur.

6. Dispositif selon l'une des revendications 2, 4 ou 5, **caractérisé par le fait que** la pompe à jet (260) est alimentée à la fois par une dérivation (270) raccordée à la sortie (120) de la pompe de puisage (100) et par une conduite (290) de retour qui reçoit le carburant non consommé par le moteur.

7. Dispositif selon l'une des revendications 2 à 6, **caractérisé par le fait que** la pompe à jet (260) a son entrée de débit aspiré (264) équipée d'un clapet anti-retour (280).

8. Dispositif selon l'une des revendications 2 à 6, **caractérisé par le fait que** la pompe à jet (260) a sa sortie prolongée par un tube vertical dont l'extrémité est située à proximité du sommet du boîtier de filtre (200).

9. Dispositif selon l'une des revendications 1 à 4, 7 et 8, **caractérisé par le fait qu'**un conduit (290) de retour recevant le carburant non consommé par le moteur débouche dans la chambre d'entrée (240) du boîtier de filtre (200).

10. Dispositif selon l'une des revendications 1 à 9, **caractérisé par le fait que** le conduit (224) formant siphon possède un tronçon horizontal (225) qui communique avec l'orifice de dégazage (222) du boîtier de filtre et un tronçon généralement vertical dont l'embouchure inférieure (227) est située au voisinage du fond d'une cavité (220) définie par le boîtier de filtre fin (200) et dans laquelle est située la pompe de puisage (100).

11. Dispositif selon l'une des revendications 1 à 10, **caractérisé par le fait que** l'embouchure (227) du conduit (224) formant siphon est située en dessous du niveau de l'orifice de dégazage (130) de la pompe de puisage (100).

12. Dispositif selon l'une des revendications 1 à 11, **caractérisé par le fait que** le diamètre du conduit (224) formant siphon est supérieur au diamètre de l'orifice de dégazage (130) de la pompe de puisage (100).

13. Dispositif selon l'une des revendications 1 à 12, **caractérisé par le fait qu'**un régulateur de pression (400) est placé sur un conduit (270) relié à la sortie de la pompe de puisage (100) et raccordé à la tuyère motrice (262) d'une pompe à jet (260) assurant l'alimentation de la chambre d'entrée (240) du boîtier de filtre.

14. Dispositif selon l'une des revendications 1 à 13, **caractérisé par le fait qu'**une pompe à jet (260) assurant l'alimentation de la chambre d'entrée (240) du boîtier de filtre est intégrée au boîtier de la pompe de puisage (100).

15. Dispositif selon l'une des revendications 1 à 14, **caractérisé par le fait que** le filtre (210) a une forme annulaire et entoure la pompe de puisage (100).

16. Dispositif selon l'une des revendications 1 à 14, **caractérisé par le fait que** le filtre (210) est disposé latéralement à côté de la pompe de puisage (100).

17. Dispositif selon l'une des revendications 1 à 16, **caractérisé par le fait que** l'orifice de dégazage (222) du boîtier de filtre débouche dans la chambre d'entrée (240) de celui-ci.

18. Dispositif selon l'une des revendications 1 à 17, **caractérisé par le fait que** l'orifice de dégazage (130) de la pompe de puisage (100) est situé en partie inférieure du carter de la pompe de puisage (100) dans une cavité (220) délimitée par le boîtier de filtre (200).

19. Dispositif selon l'une des revendications 1 à 18 prise en combinaison avec la revendication 2 du type comprenant une pompe à jet comportant une première tuyère convergente formant tuyère motrice (262) alimentée en fluide sous pression, une seconde tuyère convergente formant tuyère de reprise (267) enveloppant la première et raccordée à une aspiration et un divergent terminal (269) faisant office de diffuseur, **caractérisé par le fait que** la seconde tuyère convergente (267) formant tuyère de reprise est raccordée directement au divergent terminal (269) formant office de diffuseur, sans mélangeur intermédiaire.

20. Dispositif selon la revendication 19, **caractérisé par le fait que** l'extrémité formant buse de sortie du col de la tuyère motrice (262) est située à 1 à 3 mm de la tuyère de reprise (267).

21. Dispositif selon l'une des revendications 19 ou 20, **caractérisé par le fait que** la tuyère de reprise (267) est délimitée par une calotte torique.

22. Dispositif selon l'une des revendications 19 à 21, **caractérisé par le fait que** le rayon de courbure R1 de la calotte torique (267) est compris entre 1 à 2 mm et très avantageusement de l'ordre de 1,6 mm.

23. Dispositif selon l'une des revendications 19 à 22, **caractérisé par le fait que** le rayon de courbure R1 de la calotte torique (267) est tangent à la tuyère de diffuseur (269).

24. Dispositif selon l'une des revendications 19 à 23, **caractérisé par le fait que** le divergent terminal formant diffuseur (269) est délimité par une enveloppe conique.

25. Dispositif selon l'une des revendications 19 à 24, **caractérisé par le fait que** l'angle de divergence C du tube diffuseur (269) est compris entre 2 à 10° et très avantageusement de l'ordre de 4°.

26. Dispositif selon l'une des revendications 19 à 25, **caractérisé par le fait que** le rayon interne (R2) de la tuyère de reprise (267), au niveau de sa plus petite section est compris entre 1,8 mm et 3,0 mm et très avantageusement de l'ordre de 2 à 2,6 mm.

27. Dispositif selon l'une des revendications 19 à 26, **caractérisé par le fait que** la longueur du tube diffuseur (269) est comprise entre 10 à 40 mm et très avantageusement de l'ordre de 18 mm.

28. Dispositif selon l'une des revendications 19 à 27, **caractérisé par le fait que** la tuyère motrice (262) est de géométrie conique et présente une longueur comprise entre 4 à 8 mm, très avantageusement de l'ordre du diamètre de l'aspiration (264).

29. Dispositif selon l'une des revendications 19 à 28, **caractérisé par le fait que** l'angle de convergence (B) de la tuyère motrice (262) est compris entre 0° et 30° et très avantageusement de l'ordre de 5°.

30. Dispositif selon l'une des revendications 19 à 29, **caractérisé par le fait que** l'enveloppe torique de la tuyère de reprise (267) couvre un angle (A) compris entre 30° à 60° et très avantageusement de l'ordre de 45°.

31. Dispositif selon l'une des revendications 19 à 30, **caractérisé par le fait que** la pompe à jet est équipée d'une valve de surpression (50).

## Patentansprüche

1. Kraftstoffördervorrichtung für den Vorratsbehälter eines Kraftfahrzeugs, die eine Förderpumpe (100) und ein stromaufwärts der Pumpe (100) angeordnetes Feinfilter (210) umfaßt,
**dadurch gekennzeichnet, daß**
- das Filtergehäuse (200) in ihrem oberen Bereich eine Entgasungsöffnung (222) besitzt,
- die Förderpumpe (100) gleichermaßen eine Entgasungsöffnung (130) besitzt, und
- das Filtergehäuse (200) mit einer Leitung (224) versehen ist, welche die Entgasungsöffnung (222) des Gehäuses (200) fortsetzt, in einem Hohlraum (220) mündet, der mit der Entgasungsöffnung der Pumpe (100) gemeinsam, und eine Mündung (227) besitzt, die auf einer Höhe gleich oder unterhalb der der Entgasungsöffnung (130) der Pumpe (100) befindlich ist, wobei die besagte Leitung (224) so ausgebildet ist, daß sie einen Siphon bildet, der in der Lage ist, den nahe ihrer Mündung (227) befindlichen Kraftstoff bei Stillstandssequenzen der Förderpumpe (100) zum Inneren des Filtergehäuses (200) zu führen.

2. Vorrichtung nach Anspruch 1, **dadurch gekennzeichnet, daß** die Eingangskammer (240) des Filtergehäuses (200) durch eine Strahlpumpe (260) gespeist und unter Druck gesetzt ist.

3. Vorrichtung nach einem der Ansprüche 1 oder 2, **dadurch gekennzeichnet, daß** die Förderpumpe (100) vom Typ einer Turbinen- oder Zentrifugenpumpe ist.

4. Vorrichtung nach Anspruch 2, **dadurch gekennzeichnet, daß** die Strahlpumpe (260) gespeist wird durch eine Abzweigleitung (270), die an den Ausgang (120) der Förderpumpe (100) angeschlossen ist.

5. Vorrichtung nach Anspruch 2, **dadurch gekennzeichnet, daß** die Strahlpumpe (260) durch eine den vom Motor nicht verbrauchten Kraftstoff aufnehmende Rückleitung (290) gespeist wird.

6. Vorrichtung nach einem der Ansprüche 2, 4 oder 5, **dadurch gekennzeichnet, daß** die Strahlpumpe (260) sowohl durch eine Abzweigleitung (270), die an dem Ausgang (120) der Förderpumpe (100) angeschlossen ist, als auch durch eine Rückleitung (290), die den vom Motor nicht verbrauchten Kraftstoff aufnimmt, gespeist wird.

7. Vorrichtung nach einem der Ansprüche 2 bis 6, **dadurch gekennzeichnet, daß** die Strahlpumpe (260) an ihrem Ansaugmengeneingang (264) mit einem Rückschlagventil (280) versehen ist.

8. Vorrichtung nach einem der Ansprüche 2 bis 6, **dadurch gekennzeichnet, daß** die Strahlpumpe (260) an ihrem Ausgang durch eine vertikale Röhre fortgesetzt ist, deren Ende in der Nähe der höchsten Stelle des Filtergehäuses (200) befindlich ist.

9. Vorrichtung nach einem der Ansprüche 1 bis 4, 7 und 8, **dadurch gekennzeichnet, daß** eine den vom Motor nicht verbrauchten Kraftstoff aufnehmende Rückleitung (290) in der Eingangskammer (240) des Filtergehäuses (200) mündet.

10. Vorrichtung nach einem der Ansprüche 1 bis 9, **dadurch gekennzeichnet, daß** die den Siphon bildende Leitung (224) ein horizontales Teilstück (225) besitzt, das mit der Entgasungsöffnung (222) des Filtergehäuses in Verbindung steht, und ein im wesentlichen vertikales Teilstück, dessen untere Mündung (227) in der Nähe des Bodens eines Hohlraums (220) befindlich ist, der durch das Gehäuse des Feinfilters (200) begrenzt ist und in welchem sich die Förderpumpe (100) befindet.

11. Vorrichtung nach einem der Ansprüche 1 bis 10, **dadurch gekennzeichnet, daß** die Mündung (227) der den Siphon bildenden Leitung (224) unterhalb des Niveaus der Entgasungsöffnung (130) der Förderpumpe (100) befindlich ist.

12. Vorrichtung nach einem der Ansprüche 1 bis 11, **dadurch gekennzeichnet, daß** der Durchmesser der den Siphon bildenden Leitung (224) größer ist als der Durchmesser der Entgasungsöffnung (130) der Förderpumpe (100).

13. Vorrichtung nach einem der Ansprüche 1 bis 12, **dadurch gekennzeichnet, daß** ein Druckregler (400) in eine Leitung (270) geschaltet ist, die mit dem Ausgang der Förderpumpe (100) verbunden und an die Treibdüse (262) einer Strahlpumpe (260) angeschlossen ist, die die Versorgung der Eingangskammer (240) des Filtergehäuses sicherstellt.

14. Vorrichtung nach einem der Ansprüche 1 bis 13, **dadurch gekennzeichnet, daß** eine Strahlpumpe (260), die die Versorgung der Eingangskammer (240) des Filtergehäuses sicherstellt, in das Gehäuse der Förderpumpe (100) integriert ist.

15. Vorrichtung nach einem der Ansprüche 1 bis 14, **dadurch gekennzeichnet, daß** das Filter (210) eine Ringform hat und die Förderpumpe (100) umgibt.

16. Vorrichtung nach einem der Ansprüche 1 bis 14, **dadurch gekennzeichnet, daß** das Filter (210) seitlich neben der Förderpumpe (100) angeordnet ist.

17. Vorrichtung nach einem der Ansprüche 1 bis 16, **dadurch gekennzeichnet, daß** die Entgasungsöffnung (222) des Filtergehäuses in der Eingangskammer (240) des letzteren mündet.

18. Vorrichtung nach einem der Ansprüche 1 bis 17, **dadurch gekennzeichnet, daß** die Entgasungsöffnung (130) der Förderpumpe (100) in einem unteren Teil des Gehäuses der Förderpumpe (100) in einem Hohlraum (220), der durch das Filtergehäuse (200) begrenzt ist, befindlich ist.

19. Vorrichtung nach einem der Ansprüche 1 bis 18 in Verbindung mit Anspruch 2, von der Art, die eine Strahlpumpe umfaßt, die eine von einem unter Druck stehenden Fluid gespeiste, die Treibdüse (262) bildende erste konvergente Düse, eine die erste umgebende und an eine Ansaugung angeschlossene, die Aufnahmedüse (267) bildende zweite konvergente Düse und ein eine Diffusormündung bildendes divergentes Endteil (269) aufweist, **dadurch gekennzeichnet, daß** die die Aufnahmedüse bildende zweite konvergente Düse (267) ohne Zwischenmischer direkt an das die Diffusormündung bildende divergente Endteil (269) angeschlossen ist.

20. Vorrichtung nach Anspruch 19, **dadurch gekennzeichnet, daß** das die Ausgangsdüse des Halses der Treibdüse (262) bildende Ende 1 bis 3 mm von der Aufnahmedüse (267) befindlich ist.

21. Vorrichtung nach einem der Ansprüche 19 oder 20, **dadurch gekennzeichnet, daß** die Aufnahmedüse (267) durch eine torusförmige Kalotte begrenzt ist.

22. Vorrichtung nach einem der Ansprüche 19 bis 21, **dadurch gekennzeichnet, daß** der Krümmungsradius R1 der torusförmigen Kalotte (267) zwischen 1 und 2 mm und sehr vorteilhafterweise in der Größenordnung von 1,6 mm beträgt.

23. Vorrichtung nach einem der Ansprüche 19 bis 22, **dadurch gekennzeichnet, daß** der Krümmungsradius R1 der torusförmigen Kalotte (267) die Diffusordüse (269) berührt.

24. Vorrichtung nach einem der Ansprüche 19 bis 23, **dadurch gekennzeichnet, daß** das den Diffusor (269) bildende divergente Endteil durch eine konische Hülle begrenzt ist.

25. Vorrichtung nach einem der Ansprüche 19 bis 24, **dadurch gekennzeichnet, daß** der Divergenzwinkel (C) der Diffusorröhre (269) zwischen 2 bis 10° und sehr vorteilhafterweise in der Größenordnung von 4° beträgt.

26. Vorrichtung nach einem der Ansprüche 19 bis 25, **dadurch gekennzeichnet, daß** der Innenradius (R2) der Aufnahmedüse (267) auf der Höhe von ihrem kleinsten Querschnitt zwischen 1,8 mm und 3,0 mm und sehr vorteilhafterweise in der Größenordnung von 2 bis 2,6 mm beträgt.

27. Vorrichtung nach einem der Ansprüche 19 bis 26, **dadurch gekennzeichnet, daß** die Länge der Diffusorröhre (269) zwischen 10 bis 40 mm und sehr vorteilhafterweise in der Größenordnung von 18 mm beträgt.

28. Vorrichtung nach einem der Ansprüche 19 bis 27, **dadurch gekennzeichnet, daß** die Treibdüse (262) von einer konischen Geometrie ist und eine Länge aufweist, die zwischen 4 bis 8 mm beträgt, sehr vorteilhafterweise in der Größenordnung des Durchmessers der Ansaugung (264).

29. Vorrichtung nach einem der Ansprüche 19 bis 28, **dadurch gekennzeichnet, daß** der Konvergenzwinkel (B) der Treibdüse (262) zwischen 0°und 30° und sehr vorteilhafterweise in der Größenordnung von 5° beträgt.

30. Vorrichtung nach einem der Ansprüche 19 bis 29, **dadurch gekennzeichnet, daß** die torusförmige Hülle der Aufnahmedüse (267) einen Winkel (A) abdeckt, der zwischen 30° bis 60° und sehr vorteilhafterweise in der Größenordnung von 45° beträgt.

31. Vorrichtung nach einem der Ansprüche 19 bis 30, **dadurch gekennzeichnet, daß** die Strahlpumpe mit einem Überdruckventil (50) ausgestattet ist.

## Claims

1. A device for drawing fuel for a motor vehicle tank, the device comprising a drawing pump (100) and a fine filter (210) placed upstream from the pump (100), and being **characterized by** the facts that:
the housing (200) of the filter possesses a degassing orifice (222) in the top portion thereof;
· the drawing pump (100) also possesses a degassing orifice (130); and
· the filter housing (200) is fitted with a duct (224) which extends the degassing orifice (222) of the housing (200), opens out into a cavity (220) common to the degassing orifice of the pump (100), and possesses a mouth (227) situated at a height that is equal to or lower than that of the degassing orifice (130) of the pump (100), said duct (224) being shaped so as to constitute a siphon suitable for conveying fuel around the mouth (227) to the inside of the filter housing (200) while the drawing pump (100) is being stopped.

2. A device according to claim 1, **characterized by** the fact that the inlet chamber (240) of the filter housing (200) is fed and pressurized by means of a jet pump (260).

3. A device according to claim 1 or claim 2, **characterized by** the fact that the drawing pump (100) is of the turbine or centrifugal type.

4. A device according to claim 2, **characterized by** the fact that the jet pump (260) is fed by a branch (270) connected to the outlet (120) of the drawing pump (100).

5. A device according to claim 2, **characterized by** the fact that the jet pump (260) is fed by a return duct (290) receiving fuel that is not consumed by the engine.

6. A device according to any one of claims 2, 4, and 5, **characterized by** the fact that the jet pump (260) is fed both by a branch (270) connected to the outlet (120) of the drawing pump (100) and by a return duct (290) which receives fuel that is not consumed by the engine.

7. A device according to any one of claims 2 to 6, **characterized by** the fact that the jet pump (260) has its suction inlet (264) fitted with a non-return valve (280).

8. A device according to any one of claims 2 to 6, **characterized by** the fact that the jet pump (260) has its outlet extended by a vertical tube whose end is situated close to the top of the filter housing (200).

9. A device according to any one of claims 1 to 4, 7, and 8, **characterized by** the fact that a return duct (290) receiving the fuel that is not consumed by the engine opens out into the inlet chamber (240) of the filter housing (200).

10. A device according to any one of claims 1 to 9, **characterized by** the fact that the siphon-forming duct (224) possesses a horizontal segment (225) which communicates with the degassing orifice (222) of the filter housing and a generally vertical segment whose bottom mouth (227) is situated in the vicinity of the bottom of a cavity (220) defined by the housing (200) for the fine filter and in which the drawing pump (100) is situated.

11. A device according to any one of claims 1 to 10, **characterized by** the fact that the mouth (227) of the siphon-forming duct (224) is situated beneath the level of the degassing orifice (130) of the drawing pump (100).

12. A device according to any one of claims 1 to 11, **characterized by** the fact that the diameter of the siphon-forming duct (224) is greater than the diameter of the degassing orifice (130) of the drawing pump (100).

13. A device according to any one of claims 1 to 12, **characterized by** the fact that a pressure regulator (400) is placed on a duct (270) connected to the outlet of the drawing pump (100) and to the driving Venturi (262) of a jet pump (260) feeding the inlet chamber (240) of the filter housing.

14. A device according to any one of claims 1 to 13, **characterized by** the fact that a jet pump (260) feeding the inlet chamber (240) of the filter housing is integrated in the casing of the drawing pump (100).

15. A device according to any one of claims 1 to 14, **characterized by** the fact that the filter (210) is annular in shape and surrounds the drawing pump (100).

16. A device according to any one of claims 1 to 14, **characterized by** the fact that the filter (210) is disposed on one side of the drawing pump (100).

17. A device according to any one of claims 1 to 16, **characterized by** the fact that the degassing orifice (222) of the filter housing opens out into the inlet chamber (240) thereof.

18. A device according to any one of claims 1 to 17, **characterized by** the fact that the degassing orifice (130) of the drawing pump (100) is situated in the bottom portion of the casing of the drawing pump (100) in a cavity (220) defined by the filter housing (200).

19. A device according to any one of claims 1 to 18 taken in combination with claim 2, the device being of the type comprising a jet pump having a first converging Venturi forming a driving Venturi (262) which is fed with fluid under pressure, a second converging Venturi forming a takeup Venturi (267) surrounding the first and connected to a suction inlet, and an end diverging portion (269) acting as a diffuser, the device being **characterized by** the fact that the second converging Venturi (267) forming the takeup Venturi is connected directly to the end diverging portion (269) acting as a diffuser without any intermediate mixer.

20. A device according to claim 19, **characterized by** the fact that the end forming the outlet nozzle from the throat of the driving Venturi (262) is situated at 1 mm to 3 mm from the takeup Venturi (267).

21. A device according to claim 19 or claim 20, **characterized by** the fact that the takeup Venturi (267) is defined by a toroidal cap.

22. A device according to any one of claims 19 to 21, **characterized by** the fact that the radius of curvature (R1) of the toroidal cap (267) lies in the range 1 mm to 2 mm, and is very advantageously about 1.6 mm.

23. A device according to any one of claims 19 to 22, **characterized by** the fact that the radius of curvature (R1) of the toroidal cap (267) is tangential to the Venturi of the diffuser (269).

24. A device according to any one of claims 19 to 23, **characterized by** the fact that the diffuser-forming end diverging portion (269) is defined by a conical envelope.

25. A device according to any one of claims 19 to 24, **characterized by** the fact that the angle of divergence (C) of the diffuser tube (269) lies in the range 2° to 10° and most advantageously is about 4°.

26. A device according to any one of claims 19 to 25, **characterized by** the fact that intemal radius (R2) of the takeup Venturi (267) at its smallest section lies in the range 1.8 mm to 3 mm, and most advantageously is about 2 mm to 2.6 mm.

27. A device according to any one of claims 19 to 26, **characterized by** the fact that the length of the diffuser tube (269) lies in the range 10 mm to 14 mm and most advantageously is about 18 mm.

28. A device according to any one of claims 19 to 27, **characterized by** the fact that the driving Venturi (262) is conical in shape and presents a length lying in the range 4 mm to 8 mm, and is most advantageously approximately equal to the diameter of the suction inlet (264).

29. A device according to any one of claims 19 to 28, **characterized by** the fact that the angle of convergence (B) of the driving Venturi (262) lies in the range 0° to 30° and is most advantageously about 5°.

30. A device according to any one of claims 19 to 29, **characterized by** the fact that the toroidal envelope of the takeup Venturi (267) covers an angle (A) lying in the range 30° to 60°, and most advantageously is about 45°.

31. A device according to any one of claims 19 to 30, **characterized by** the fact that the jet pump is fitted with a pressure-release valve (50).
